# EUROPÄISCHE PATENTSCHRIFT

(11) **EP 3 299 788 B1**
(45) Veröffentlichungstag und Bekanntmachung des Hinweises auf die Patenterteilung: **24.07.2019**
(21) Anmeldenummer: 17187742.6
(22) Anmeldetag: 24.08.2017
(51) Int. Cl.: G01L 19/00, G01L 13/02, G01L 19/06, G01L 19/14

(54) **FLANSCH-SATZ FÜR EINEN DIFFERENZDRUCK-MESSAUFNEHMER**
FLANGE SET FOR A PRESSURE DIFFERENTIAL SENSOR
RACCORD À BRIDES POUR UN CAPTEUR DE MESURE DE PRESSION DIFFÉRENTIELLE

(30) Priorität: 23.09.2016 DE 102016117989
(43) Veröffentlichungstag der Anmeldung: 28.03.2018
(73) Patentinhaber: Endress+Hauser SE+Co. KG, 79689 Maulburg (DE)
(72) Erfinder: HÜGEL, Michael, 79541 Lörrach (DE); UEHLIN, Thomas, 79650 Schopfheim (DE); LEMKE, Benjamin, 12051 Berlin (DE)
(74) Vertreter: Andres, Angelika Maria

(56) Entgegenhaltungen:
- DE-A1-102014 102 719
- DE-A1-102014 110 615
- DE-T5-112004 001 504

## Beschreibung

Die Erfindung betrifft einen Flansch-Satz für einen Differenzdruck-Messaufnehmer mit zwei auf einander gegenüberliegende, jeweils eine mit einem Druck zu beaufschlagende Membran umfassende Außenseiten eines Messwerks des Differenzdruck-Messaufnehmers montierbaren Seitenflanschen, die jeweils
- eine Seitenwand umfassen, die im montierten Zustand eine der beiden Membranen des Messwerks überdeckt und unter sich eine an die jeweilige Membran angrenzende Druckkammer einschließt, und
- einen auf einer ersten von vier einander jeweils paarweise gegenüberliegenden Stirnseiten der Seitenwand angeordneten ersten Prozessanschluss umfassen, der einen Druckkanal-Anschlussbereich umfasst, in dem ein durch den Seitenflansch hindurch zur Druckkammer führender Druckkanal mündet,
sowie mit einem solchen Flansch-Satz ausgestattete Differenzdruck-Messaufnehmer.

Differenzdruck-Messaufnehmer werden in der industriellen Messtechnik zur Aufnahme von Differenzdrücken eingesetzt, die einer Druckdifferenz zwischen zwei dem Messaufnehmer zuzuführenden Drücken entsprechen.

Differenzdruck-Messaufnehmer umfassen ein mit einem Differenzdrucksensor ausgestattes Messwerk, das zwei im Betrieb jeweils mit einem der beiden Drücke zu beaufschlagende Membranen umfasst. Hierfür haben sich in der industriellen Messtechnik zwei Messwerk-Varianten etabliert, die sich durch die Anordnung der Membranen unterscheiden.

Bei der ersten Messwerk-Variante sind die beiden Membranen auf ein und derselben Außenseite des Messwerks in einer Ebene nebeneinander angeordnet. Bei dieser Variante sind die Membranen Trennmembranen, die jeweils einen dem Differendrucksensor vorgeschalteten Druckmittler nach außen abschließen, über den ein auf die Außenseite der Trennmembran einwirkender Druck auf den Differenzdrucksensor übertragen wird.

Bei diesen Messwerken kann die die beiden Membranen umfassende Frontseite des Messwerks als Prozessanschlussflansch ausgebildet sein, über den der Differenzdruck-Messaufnehmer auf einem messstellenseitig vorgesehen Prozessanschluss montiert und an Wirkdruckleitungen angeschlossen werden kann, über die die Membranen im Betrieb mit dem jeweiligen Druck beaufschlagbar sind. Ein solcher Differenzdruck-Messaufnehmer ist z.B. aus der DE 10 2014 102 719 A1 bekannt. Der dort beschriebene Differenzdruck-Messaufnehmer ist unter Zwischenfügung eines plattenförmigen Abstandshalters auf einem Prozessanschluss eines Ventilblocks montiert.

Alternativ kann auf der die Trennmembranen umfassenden Frontseite von Messwerken der ersten Variante eine Frontabdeckung vorgesehen sein, unter der auf deren Innenseite zwei in einer Ebene nebeneinander angeordnete Druckkammern eingeschlossen sind, die jeweils an eine der beiden Trennmembranen angrenzen, und auf deren Außenseite ein Prozessanschluss vorgesehen ist, über den der Differenzdruck-Messaufnehmer auf einem messstellenseitig vorgesehen Prozessanschluss montiert und an Wirkdruckleitungen angeschlossen werden kann.

Bei der zweiten Messwerk-Variante sind die beiden Membranen auf einander diametral gegenüberliegenden Außenseiten des Messwerks angeordnet. Die Membranen der zweiten Messwerks-Variante können ebenfalls Trennmembran von dem Differenzdrucksensor vorgeschalteten Druckmittlern sein. Alternativ können sie aber auch mediumsbeständige Membranen des in das Messwerk eingefassten Differenzdrucksensors sein. So ist beispielsweise in der DE 103 47 861 A1 ein Differenzdruck-Messaufnehmer mit einem in ein Messwerk eingefassten keramischen Differenzdrucksensor beschrieben, dessen Messmembranen die auf den gegenüberliegenden Außenseiten des Messwerks angeordneten mit Druck zu beaufschlagenden Membranen bilden.

Messwerke dieser zweiten Variante umfassende Differenzdruck-Messaufnehmer werden üblicher Weise mit einem Flansch-Satz ausgestattet, der zwei auf die beiden einander gegenüberliegenden Außenseiten des Messwerks zu montierende Seitenflansche umfasst. So ist beispielsweise in der DE 103 47 861 A1 ein Flansch-Satz beschrieben, der zwei auf die beiden einander gegenüberliegenden Außenseiten des Messwerks zu montierende Seitenflansche umfasst, die jeweils
- eine Seitenwand umfassen, die im montierten Zustand eine der beiden Membranen des Messwerks überdeckt und unter sich eine an die jeweilige Membran angrenzende Druckkammer einschließt, und
- einen auf einer ersten von vier einander jeweils paarweise gegenüberliegenden Stirnseiten der Seitenwand angeordneten ersten Prozessanschluss umfassen, der einen Druckkanal-Anschlussbereich umfasst, in dem ein durch den Seitenflansch hindurch zur Druckkammer führender Druckkanal mündet.

Die in der DE 103 47 861 A1 beschriebenen Seitenflansche umfassen jeweils einen auf deren dem ersten Prozessanschluss gegenüberliegenden Stirnseite angeordneten identisch ausgebildeten zweiten Prozessanschluss. Das bietet den Vorteil, dass die in den beiden nicht zur Montage benötigten Prozessanschlüssen mündenden Druckkanäle dazu genutzt werden können, um die Druckkammern bei Bedarf zu belüften oder um Kondensat abzulassen.

Eine solche Belüftung bzw. das Ablassen von Kondensat ist bei Differenzdruck-Messaufnehmern mit Messwerken der ersten Variante nicht ohne weiteres möglich. Hinderlich ist insoweit, dass die an die Membranen angrenzenden Druckkammern hier in einer Ebene nebeneinander angeordnet sind, sowie, dass auf der dem Prozessanschluss gegenüberliegenden Seite der Frontabdeckungen nicht ohne Weiteres zwei weitere Prozessanschlüsse vorgesehen werden können, über die die Druckkammern belüftet werden könnten oder über die Kondensat abgelassen werden könnte, da sich dort das Messwerk befindet.

Bei Messwerken der ersten Variante befinden sich die Membranmitten der nebeneinander, in einer Ebene angeordneten Membranen in einem Abstand zueinander, der geringer ist, als der Abstand zwischen den Membranmitten von auf einander gegenüberliegenden Außenseiten von Messwerken der zweiten Variante angeordneten Membranen.

Das hatte zur Folge, dass sich für die Montage und den Anschluss von Differenzdruck-Messaufnehmern zwei verschiedene Prozessanschlussgeometrien etabliert haben, die sich durch die Anordnung von deren Druckkanal-Anschlussbereichen unterscheiden. Dabei sind die beiden Druckkanal-Anschlussbereiche von Prozessanschlüssen mit einer für den Anschluss und die Montage von Differenzdruck-Messaufnehmern mit Messwerken der ersten Variante etablierten ersten Prozessanschlussgeometrie in einen geringeren Abstand zueinander angeordnet, als die beiden Druckkanal-Anschlussbereiche von Prozessanschlüssen mit einer für den Anschluss und die Montage von Differenzdruck-Messaufnehmern mit Messwerken der zweiten Variante etablierten zweiten Prozessanschlussgeometrie. Als zweite Prozessanschlussflanschgeometrie hat sich in der industriellen Messtechnik die in der vom Deutschen Institut für Normung in der Norm DIN EN 61518 bzw. die von der Internationalen Elektrotechnischen Kommission in der dazu korrespondieren Norm IEC 6158 im Detail festgelegte Flanschanschlussgeometrie etabliert.

Aufgrund der unterschiedlichen Prozessanschlussgeometrien können Messaufnehmer mit Messwerken der zweiten Variante nicht ohne weiteres auf für Messaufnehmer mit Messwerken der ersten Variante vorgesehenen Prozessanschlüssen eingesetzt werden.

Diesem Problem kann in einigen Anwendungsfällen dadurch begegnet werden, dass Messaufnehmer und Prozessanschluss über einen dazwischen anzuordnenden Adapter miteinander verbunden werden, der derart ausgebildet ist, dass er die messaufnehmerseitig vorhandene zweite Prozessanschlussgeometrie in die messtellenseitig vorgesehene erste Prozessanschlussgeometrie überführt.

Das Zwischenfügen eines Adapters verursacht jedoch zusätzliche Kosten und einen zusätzlichen Montageaufwand. Darüber hinaus ist sowohl zwischen dem Adapter und dem Messaufnehmer, als auch zwischen dem Adapter und dem messtellenseitigen Prozessanschluss eine druckdichte Abdichtung der beiden durch den Adapter hindurch verlaufenden Druckübertragungspfade zu gewährleisten. Außerdem kann ein Adapter nur dann eingesetzt werden, wenn am Einsatzort genügend Platz für den Adapter vorhanden ist.

Es ist eine Aufgabe der Erfindung Mittel anzugeben, die es ermöglichen Messwerke der zweiten Variante ohne Zwischenfügung eines Adapters auf die erste Prozessanschlussgeometrie aufweisenden Prozessanschlüssen einzusetzen.

Hierzu umfasst die Erfindung einen Flansch-Satz für einen Differenzdruck-Messaufnehmer mit zwei auf einander gegenüberliegende, jeweils eine mit einem Druck zu beaufschlagende Membran umfassende Außenseiten eines Messwerks des Differenzdruck-Messaufnehmers montierbaren Seitenflanschen, die jeweils
- eine Seitenwand umfassen, die im montierten Zustand eine der beiden Membranen des Messwerks überdeckt und unter sich eine an die jeweilige Membran angrenzende Druckkammer einschließt, und
- einen auf einer ersten von vier einander jeweils paarweise gegenüberliegenden Stirnseiten der Seitenwand angeordneten ersten Prozessanschluss umfassen, der einen Druckkanal-Anschlussbereich umfasst, in dem ein durch den Seitenflansch hindurch zur Druckkammer führender Druckkanal mündet,
der sich dadurch auszeichnet, dass
- die ersten Prozessanschlüsse derart ausgebildet sind, dass ein mit dem Flansch-Satz ausgestatteter Differenzdruck-Messaufnehmer über die ersten Prozessanschlüsse auf einem Prozessanschluss montierbar und anschließbar ist, der eine für den Anschluss und die Montage von Differenzdruck-Messaufnehmern mit zwei auf ein und derselben Außenseite von deren Messwerk angeordneten, mit Druck zu beaufschlagenden Membranen ausgelegte erste Prozessanschlussgeometrie aufweist.

Die erfindungsgemäßen Flansch-Sätze ermöglichen es Messwerke der zweiten Variante, sowie damit ausgestattete Differenzdruck-Messaufnehmer ohne Zwischenfügung eines Adapters auf die erste Prozessanschlussgeometrie aufweisenden Prozessanschlüssen einzusetzen.

Dabei ermöglichen die ersten Prozessanschlüsse eine Montage auch an solchen Einsatzorten, an denen ein Adapter aus Platzgründen nicht eingesetzt werden kann. Da kein Adapter zwischengefügt werden muss ergibt sich eine höhere Vibrationsfestigkeit und die beim Einsatz von Adaptern zusätzlich benötigten Abdichtungen zwischen dem Adapter und dem messstellenseitigen Prozessanschluss entfallen.

Ein weiterer Vorteil besteht darin, dass erfindungsgemäße Flansch-Sätze nicht nur zur Erstbestückung von Messwerken der ersten Variante, sondern auch zur Umrüstung von bestehenden, diese Messwerke umfassenden Differenzdruck-Messaufnehmern eingesetzt werden.

Die erfindungsgemäße Ausgestaltung zeichnet sich dadurch aus, dass
- die ersten Prozessanschlüsse jeweils zwei Bohrungen umfassen,
   -- die zur Aufnahme von Befestigungsmitteln, insb. von Bolzenschrauben dienen, über die der jeweilige erste Prozessanschluss auf einer Hälfte eines die erste Prozessanschlussgeometrie aufweisenden Prozessanschlusses befestigbar ist, und
   -- die derart angeordnet sind, dass die Bohrungen beider Seitenflansche im auf das Messwerk montierten Zustand in einem Rechteck angeordnet sind, und
- die Druckkanal-Anschlussbereiche der ersten Prozessanschlüsse jeweils mittig zwischen den beiden Bohrungen und gegenüber einer die beiden Bohrungen verbindenden, gedachten Linie in einer parallel zur Flächennormale auf die Innenseite der Seitenwand des jeweiligen Seitenflansches nach innen weisenden Richtung versetzt angeordnet sind.

Eine zweite Ausgestaltung zeichnet sich dadurch aus, dass die ersten Prozessanschlüsse an die jeweilige erste Stirnseite angeformte Sonderflansche umfassen, die jeweils einen an die erste Stirnseite angrenzenden Flanschbereich und einen an dessen parallel zur Innenseite der Seitenwand ausgerichteten Innenseite anschließenden Fortsatz umfassen.

Eine Weiterbildung der zweiten Ausgestaltung zeichnet sich dadurch aus, dass die Grundflächen der Fortsätze in von der ersten Stirnseite zur Prozessanschlussfläche des jeweiligen ersten Prozessanschlusses verlaufender Richtung kontinuierlich ansteigen, wobei die Grundflächen insb. im Wesentlichen kreissegmentförmige oder ellipsensegmentförmige Grundflächen sind und/oder die Grundflächen insb. derart ansteigen, dass die Fortsätze auf deren von der Prozessanschlussfläche abgewandten Außenseite eine im Schnitt gesehen nach außen gewölbte Mantelfläche ausbilden.

Eine erste Weiterbildung der Erfindung zeichnet sich dadurch aus, dass
- in beiden Seitenflanschen jeweils ein durch dessen Seitenwand hindurch verlaufender, in der Druckkammer, insb. in einem vom ersten Prozessanschluss abgewandten Randbereich der Druckkammer, mündender Kanal vorgesehen ist, und
- für jeden Kanal ein mittels mechanischer Verbindungmittel, insb. lösbarer Verbindungsmittel, montierbares, im montierten Zustand den Kanal nach außen verschließendes Element, insb. eine Belüftungsschraube oder ein Verschluss, vorgesehen ist.

Eine zweite Weiterbildung der Erfindung zeichnet sich dadurch aus, dass die Seitenflansche jeweils einen auf einer zweiten Stirnseite, insb. auf einer der ersten Stirnseite gegenüberliegenden zweiten Stirnseite, der Seitenwand angeordneten zweiten Prozessanschluss aufweisen, der einen Druckkanal-Anschlussbereich umfasst, in dem ein durch den jeweiligen Seitenflansch hindurch zur Druckkammer führender Druckkanal mündet.

Eine erste Ausgestaltung der zweiten Weiterbildung zeichnet sich dadurch aus, dass
- die zweiten Prozessanschlüsse derart ausgebildet sind, dass ein mit dem Flansch-Satz ausgestatteter Differenzdruck-Messaufnehmer über die zweiten Prozessanschlüsse auf einem Prozessanschluss montierbar und anschließbar ist, der eine für den Anschluss und die Montage von Differenzdruck-Messaufnehmern mit auf gegenüberliegenden Seiten von deren Messwerk angeordneten mit Druck zu beaufschlagenden Membranen ausgelegte zweite Prozessanschlussgeometrie aufweist,
- wobei die zweiten Prozessanschlüsse insb. jeweils einen an die zweite Stirnseite angeformten Flansch, insb einen Ovalflansch, umfassen, in dem der Druckkanal-Anschlussbereich mittig zwischen zwei Bohrungen zur Aufnahme von Befestigungsmitteln auf einer die beiden Bohrungen verbindenden gedachten Linie angeordnet ist.

Eine zweite Ausgestaltung der zweiten Weiterbildung zeichnet sich dadurch aus, dass die zweiten Prozessanschlüsse baugleich zu den ersten Prozessanschlüssen ausgebildet sind.

Eine dritte Ausgestaltung der zweiten Weiterbildung zeichnet sich dadurch aus, dass für jeden Seitenflansch jeweils ein mittels mechanischer Verbindungmittel, insb. lösbarer Verbindungsmittel, auf dem Seitenflansch montierbares Element, insb. eine Belüftungsschraube oder ein Verschluss, vorgesehen ist, das im montierten Zustand einen der im Druckkanal-Anschlussbereich des ersten oder des zweiten Prozessanschlusses mündenden Druckkanäle nach außen verschließt.

Eine dritte Weiterbildung der Erfindung zeichnet sich dadurch aus, dass die Druckkanäle in den ersten Prozessanschlüssen jeweils in einem einer Außenseite des jeweiligen Seitenflanschs zugewandten Randbereich des zugehörigen Druckkanal-Anschlussbereichs münden.

Eine bevorzugte Ausgestaltung der Erfindung zeichnet sich dadurch aus, dass die Seitenflansche aus Metall, insb. aus einem Stahl, insb. aus einem Duplexstahl oder einem Superduplexstahl bestehen, wobei sie insb. als einteilige Elemente, insb. als einteilige Guß- oder Schmiedeteile, ausgebildet sind.

Des Weiteren umfasst die Erfindung einen mit einem erfindungsgemäßen Flansch-Satz ausgestatteten Differenzdruck-Messaufnehmer, der sich dadurch auszeichnet, dass
- der Differenzdruck-Messaufnehmer ein mit einem Differenzdrucksensor ausgestattetes Messwerk mit zwei auf einander gegenüberliegenden Außenseiten des Messwerks angeordneten, mit Druck zu beaufschlagenden Membranen umfasst, und
- die beiden Seitenflansche auf den gegenüberliegenden Außenseiten des Messwerks in einer Ausrichtung relativ zum Messwerk derart montiert sind, dass deren ersten Prozessschlüsse in einer Ebene nebeneinander angeordnet sind.

Eine erste Weiterbildung des erfindungsgemäßen Differenzdruck-Messaufnehmers zeichnet sich dadurch aus, dass
- eine auf die Prozessanschlussflächen der ersten Prozessanschlüsse der Seitenflansche auflegbare, bei der Montage des Messaufnehmer auf einem Prozessanschluss zwischen den Prozessanschlussflächen der beiden ersten Prozessanschlüsse und der Prozessanschlussfläche des Prozessanschlusses einspannbare Dichtplatte vorgesehen ist, und
- die Dichtplatte zwei im aufgelegten Zustand die Druckkanal-Anschlussbereiche der ersten Prozessanschlüsse freigebende Durchtrittsöffnungen umfasst, die eine Dichtungsaufnahme zur Aufnahme jeweils einer Prozessdichtung bilden oder außenseitlich allseitig von einem als Prozessdichtung ausgebildeten Plattenbereich der Dichtplatte umgeben sind.

Eine Weiterbildung eines erfindungsgemäßen Differenzdruck-Messaufnehmers zeichnet sich dadurch aus, dass der Differenzdruck-Messaufnehmer mittels der ersten Prozessanschlüsse unter Zwischenfügung von zwei Prozessdichtungen auf einem die erste Prozessanschlussgeometrie aufweisenden Prozessanschluss montiert ist.

Bevorzugte Ausgestaltungen der Weiterbildungen des Differenzdruck-Messaufnehmers zeichnen sich dadurch aus, dass
- die Prozessdichtungen in Presspassung oder in Spielpassung in die Druckkanal-Anschlussbereiche frei gebende weitere Durchtrittsöffnungen einer zwischen den ersten Prozessanschlüssen und dem Prozessanschluss eingespannten Dichtplatte eingesetzte Prozessdichtungen sind,
- die Prozessdichtungen einen ringzylindrischen, formsteifen Basiskörper umfassen, an den zwei sich radial nach innen erstreckende Federschenkel derart angeformt sind, dass die Prozessdichtungen im Schnitt gesehen ein im Wesentlichen K-förmiges Profil aufweisen,
- die Prozessdichtungen durch Plattenbereiche einer zwischen den ersten Prozessanschlüssen und dem Prozessanschluss eingespannten Dichtplatte gebildet sind, die die Druckkanal-Anschlussbereiche frei gebende weitere Durchtrittsöffnungen der Dichtplatte außenseitlich allseitig umgeben, wobei die Plattenbereiche insb. durch plastische Verformung auf beiden Seiten der Dichtplatte erzeugte konzentrische, ringförmige Rippen umfassen oder durch plastische Verformung gegenüber den planaren Oberflächen der Dichtplatte in eine neue, axial versetzte Gleichgewichtslage versetzt sind, oder
- die Prozessdichtungen eine nicht-metallische Beschichtung, insb. eine thermoplastische Beschichtung, insb. eine Beschichtung aus einem Fluorpolymer, insb. aus Polytetrafluorethylen (PTFE) oder Perfluoralkoxy-Polymer (PFA), oder eine Beschichtung aus einem Fluorpolymere enthaltenden Verbundwerkstoffe, aufweisen.

Die Erfindung und weitere Vorteile werden nun anhand der Figuren der Zeichnung, in denen vier Ausführungsbeispiele dargestellt sind, näher erläutert. Gleiche Elemente sind in den Figuren mit den gleichen Bezugszeichen versehen.
- Fig. 1 zeigt:: eine Ansicht eines erfindungsgemäßen Flansch-Satzes;
- Fig. 2 zeigt:: eine Ansicht der Innenseite eines Seitenflansches von Fig. 1;
- Fig. 3 zeigt:: eine Ansicht der Außenseite eines Seitenflansches von Fig. 1;
- Fig. 4 zeigt:: einen Ansicht eines Differenzdruck-Messaufnehmer;
- Fig. 5 zeigt:: einen Differenzdruck-Messaufnehmer im Schnitt;
- Fig. 6 zeigt:: eine Ansicht der die ersten Prozessanschlüsse umfassenden Seite des Differenzdruck-Messaufnehmer von Fig. 4;
- Fig. 7 zeigt:: eine Explosionsdarstellung des auf einem Ventilblock montierten Differenzdruck-Messaufnehmers von Fig. 4;
- Fig. 8 zeigt:: einen Differenzdruck-Messaufnehmer mit ersten und hierzu identischen zweiten Prozessanschlüssen;
- Fig. 9 zeigt:: eine Ansicht einer von den ersten Prozessanschlüssen verschiedene zweite Prozessanschlüsse umfassenden Seite eines Differenzdruck-Messaufnehmers;
- Fig. 10 zeigt:: eine Prozessdichtung; und
- Fig. 11 zeigt:: eine Explosionsdarstellung des unter Zwischenfügung einer Prozessdichtungen umfassenden Dichtplatte auf einem Ventilblock montierten Differenzdruck-Messaufnehmers von Fig. 4.

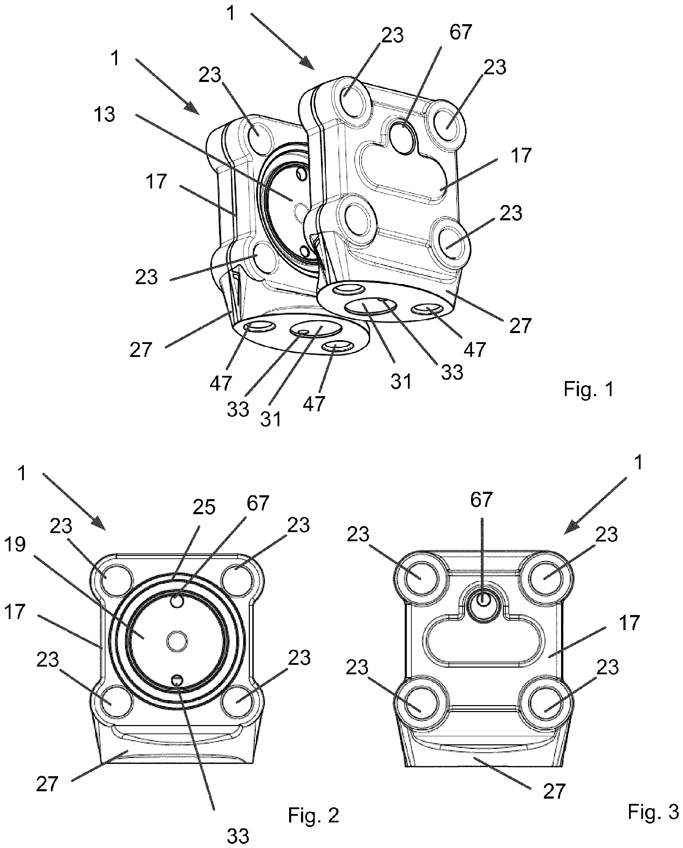

Fig. 1 zeigt eine Ansicht eines erfindungsgemäßen Flansch-Satzes mit zwei auf einander gegenüberliegende, jeweils eine mit einem Druck zu beaufschlagende Membran umfassende Außenseiten eines Messwerks des Differenzdruck-Messaufnehmers montierbaren Seitenflanschen 1. Fig. 2 zeigt eine Ansicht der Innenseite eines der beiden Seitenflansche 1 von Fig. 1. Fig. 3 zeigt eine Ansicht der Außenseite eines der beiden Seitenflansche 1 von Fig. 1.

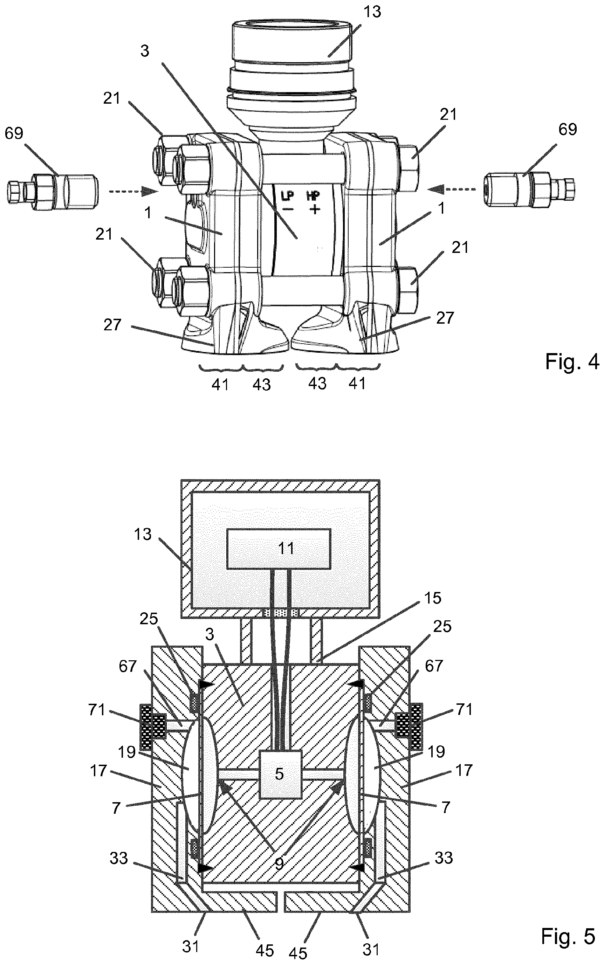

Fig. 4 zeigt eine Ansicht eines mit dem Flansch-Satz von Fig. 1 bis 3 ausgestatten Differenzdruck-Messaufnehmers. Fig. 5 zeigt einen mit einem weiteren Ausführungsbeispiel eines erfindungsgemäßen Flansch-Satzes ausgestatteten Differenzdruck-Messaufnehmer im Schnitt.

Die in Fig. 4 und 5 darstellten Differenzdruck-Messaufnehmer umfassen jeweils ein zwischen den beiden Seitenflanschen 1 angeordnetes Messwerk 3. Das Messwerk 3 umfasst einen Differenzdrucksensor 5 und zwei auf einander gegenüberliegenden Außenseiten des Messwerks 3 angeordnete, im Betrieb jeweils mit einem der beiden Drücke, deren Differenz vom Differenzdruck-Messaufnehmer aufgenommen werden soll, zu beaufschlagende Membranen 7.

Die Membranen 7 können z.B. Trennmembranen sein, die jeweils einen dem Differenzdrucksensor 5 vorgeschalteten Druckmittler 9 nach außen abschließen, über den ein auf die Außenseite von dessen Trennmembran einwirkender Druck auf den Differenzdrucksensor 5 übertragen wird. Diese Ausführungsform ist in Fig. 5 dargestellt. Alternativ können die auf den beiden einander gegenüberliegenden Außenseiten des Messwerks angeordneten Membranen aber auch mediumsbeständige Membranen eines im Messwerk angeordneten Differenzdrucksensors, z.B. keramische Messmembranen eines keramischen Differenzdrucksensors, sein.

Der Differenzdruck-Messaufnehmer umfasst eine an den Differenzdrucksensor 5 angeschlossene Messelektronik 11, die den Differenzdrucksensor 5 mit Energie versorgt und ein dem vom Differenzdrucksensor 5 messtechnisch erfassten Differenzdruck entsprechendes Messsignal erzeugt. Diese kann z.B. in einem Gehäuse 13 angeordnet, das auf einem halsförmigen auf dem Messwerk 3 vorgesehenen Träger 15 montiert ist.

Die beiden Seitenflansche 1 umfassen jeweils eine Seitenwand 17 die derart ausbildet ist, dass sie im montierten Zustand jeweils eine der beiden Membranen 7 des Messwerks 3 überdeckt und dabei unter sich eine an die jeweilige Membranen 7 angrenzende Druckkammer 19 einschließt.

Die Seitenflansche 1 sind auf den gegenüberliegenden Außenseiten des Messwerks 3 montierbar. Diese Montage kann beispielsweise derart erfolgen, dass das Messwerk 3 zwischen den beiden Seitenflanschen 1 eingespannt wird, indem die Seitenflansche 1 durch Bolzenschrauben 21 gegeneinander gespannt werden. Hierzu umfassen die Seitenflansche 1 jeweils vorzugsweise vier, vorzugsweise in einem Rechteck oder in einem Quadrat angeordnete, durch deren Seitenwand 17 hindurch führende Bohrungen 23, durch die die Bolzenschrauben 21 hindurch geführt werden können. Eine rechteckförmige Anordnung ermöglicht es die Seitenflansche 1 in zwei verschiedenen, durch Drehung der Seitenflansche 1 um 180° ineinander überführbaren Ausrichtungen zu montieren. Eine quadratische Anordnung ermöglicht es die beiden Seitenflansche 1 in vier verschiedenen durch Drehung der Seitenflansche 1 um 90° ineinander überführbaren Ausrichtungen zu montieren. Dabei werden die beiden Seitenflansche 1 immer derart montiert, dass beide die gleiche Ausrichtung aufweisen. Alternativ können die Seitenflansche 1 natürlich auch über anders ausgestaltete Befestigungsmittel auf den Außenseiten des Messwerks 3 montiert werden.

Die Abdichtung der Druckkammern 19 erfolgt vorzugsweise durch zwischen dem jeweiligen Seitenflansch 1 und dem Messwerk 3 eingespannte, hier nicht näher bezeichnete Dichtungen. Diese können z.B. in eine auf der Innenseite der jeweiligen Seitenwand 17 vorgesehene Nut 25 eingesetzt werden. Alternativ kann die Abdichtung aber auch auf andere Weise erfolgen.

Jeder Seitenflansch 1 umfasst jeweils einen ersten Prozessanschluss 27, der auf einer ersten, der vier einander jeweils paarweise gegenüberliegenden Stirnseiten von dessen Seitenwand 17 angeordnet ist. Dieser umfasst eine parallel zur ersten Stirnseite ausgerichtete Prozessanschlussfläche 29, die wiederum einen Druckkanal-Anschlussbereich 31 umfasst, in dem ein Druckkanal 33 mündet, der durch den jeweiligen Seitenflansch 1 hindurch bis zu der in dem jeweiligen Seitenflansch 1 eingeschlossenen Druckkammer 19 führt.

Erfindungsgemäß sind die ersten Prozessanschlüsse 27 derart ausgebildet, dass ein mit dem Flansch-Satz ausgestatteter Differenzdruck-Messaufnehmer über die ersten Prozessanschlüsse 27 auf einem Prozessanschluss montierbar und anschließbar ist, der eine für den Anschluss und die Montage von Differenzdruck-Messaufnehmern mit zwei auf ein und derselben Außenseite von deren Messwerk in einer Ebene nebeneinander angeordneten mit Druck zu beaufschlagenden Membranen ausgelegte erste Prozessanschlussgeometrie aufweist.

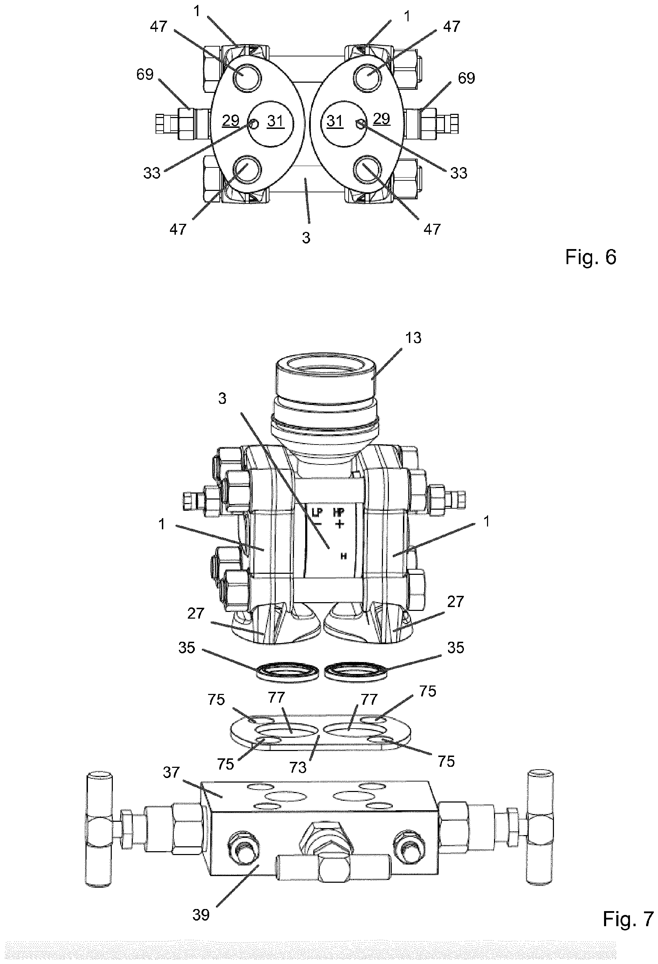

Fig. 6 zeigt hierzu eine Ansicht der die beiden Prozessanschlussflächen 29 der beiden ersten Prozessanschlüsse 27 umfassenden Außenseite des Differenzdruck-Messaufnehmers von Fig. 4.

Erfindungsgemäße Flansch-Sätze ermöglichen es Messwerke 3 mit auf gegenüberliegenden Außenseiten des Messwerks 3 angeordneten Membranen 7 ohne Zwischenfügung eines Adapters auf Prozessanschlüssen einzusetzen, die die für den Anschluss und die Montage von Messwerken mit in einer Ebene angeordneten Membranen ausgelegte erste Prozessanschlussgeometrie aufweisen.

Fig. 7 zeigt hierzu eine Explosionsdarstellung in der der in Fig. 4 dargestellte Differenzdruck-Messaufnehmer unter Zwischenfügung von zwei jeweils einen der beiden Druckkanal-Anschlussbereiche 31 gegenüber der Umgebung abdichtenden Prozessdichtungen 35 auf einem die erste Prozessanschlussgeometrie aufweisenden Prozessanschluss 37 eines Ventilblocks 39 montiert ist.

Die erfindungsgemäß durch das Zusammenwirken der beiden ersten Prozessanschlüsse 27 erzielte erste Prozessanschlussgeometrie kann durch unterschiedliche Ausgestaltungen der ersten Prozessanschlüsse 27 erzielt werden.

Vorzugsweise sind die ersten Prozessanschlüsse 27 an die jeweilige erste Stirnseite angeformte Sonderflansche, die jeweils einen an die erste Stirnseite angrenzenden Flanschbereich 41 und einen an dessen eine parallel zur Innenseite der Seitenwand 17 ausgerichteten Innenseite daran anschließenden Fortsatz 43 umfassen.

Fig. 5 zeigt ein Ausführungsbeispiel, bei dem die Sonderflansche 45 als rechtwinklig zur Seitenwand 17 ausgerichtete, an die ersten Stirnseiten angeformte, scheibenförmige Flansche ausgebildet sind, die den Flanschbereich und den Fortsatz umfassen und z.B. eine rechteckige Grundfläche aufweisen.

Vorzugsweise werden jedoch erste Prozessanschlüsse 27 einsetzt, bei denen die Grundfläche der Fortsätze 43 in von der ersten Stirnseite zur Prozessanschlussfläche 29 verlaufenden Richtung kontinuierlich ansteigt. Ein Ausführungsbeispiel hierzu ist in den Figuren 1 bis 4 dargestellt. Durch diese Formgebung wird erreicht, dass die ersten Prozessanschlüsse 27 mechanisch stabile Standbeine bilden, deren Fortsätze 43 deutlich größeren, bei einer Druckbeaufschlagung der sich über die Fortsätze 43 erstreckenden Druckkanal-Anschlussbereiche 31 darauf einwirkenden Hebelkräften standhalten können, als scheibenförmige Sonderflansche 45. Die Druckkanal-Anschlussbereiche 31 können somit mit deutlich größeren Drücken beaufschlagt werden, ohne dass die Gefahr einer spürbare Verformung der Fortsätze 43 besteht, die die Einspannung der Prozessdichtungen 35 und damit die Dichtheit der Abdichtung des Druckübertragungspfades beeinträchtigen könnte.

Die Druckbeständigkeit der Fortsätze 43 kann darüber hinaus optional noch weiter erhöht werden, indem Fortsätze 43 mit parallel zur nach außen weisenden Flächennormale auf die erste Stirnseite ansteigenden kreissegmentförmigen oder ellipsensegmentförmigen Grundflächen eingesetzt werden, und/oder die Grundflächen derart ansteigen, dass die Fortsätze 43 auf deren von der Prozessanschlussfläche 29 abgewandten Außenseite eine im Schnitt gesehen nach außen gewölbte Mantelfläche ausbilden.

Die ersten Prozessanschlüsse 27 umfassen jeweils zwei, in dem unmittelbar an die erste Stirnseite angrenzenden Flanschbereich 41 angeordnete Bohrungen 47. Diese dienen zur Aufnahme von Befestigungsmitteln, wie z.B. Bolzenschrauben, über die der jeweilige erste Prozessanschluss 27 auf einer Hälfte des die erste Prozessanschlussgeometrie aufweisenden Prozessanschlusses 47 befestigbar ist. Dabei sind die Bohrungen 47 derart angeordnet, dass die Bohrungen 47 beider Seitenflansche 1 im auf das Messwerk 3 montierten Zustand in einem Rechteck angeordnet sind.

Die Druckkanal-Anschlussbereiche 31 der ersten Prozessanschlüsse 27 erstrecken sich über einen kreisförmigen Teilbereich von deren Prozessanschlussfläche 29, in dem der Druckkanal 33 mündet. Sie sind jeweils mittig zwischen den beiden Bohrungen 47 und gegenüber einer die beiden Bohrungen 47 verbindenden, gedachten Linie in einer parallel zur Flächennormale auf die Innenseite der Seitenwand 17 des jeweiligen Seitenflansches 1 nach innen weisenden Richtung versetzt angeordnet.

Grundsätzlich genügt es, wenn die Druckkanäle 33 an einem beliebigen Ort innerhalb des jeweiligen Druckkanal-Anschlussbereichs 31 münden. Vorzugsweise münden sie jedoch jeweils in einem der Außenseite des jeweiligen Seitenflansches 1 zugewandten Randbereich des jeweiligen Druckkanal-Anschlussbereichs 31. Das bietet den Vorteil, dass die Druckkanäle 33 gradliniger durch den jeweiligen Seitenflansch 1 hindurch verlaufen und somit einfacher hergestellt werden können.

Die Seitenflansche 1 sind vorzugsweise als einteilige und damit mechanisch sehr stabile Elemente ausgebildet. Sie bestehen vorzugsweise aus Metall, vorzugsweise aus Stahl, und werden z.B. als vorzugsweise einteilige Guß- oder Schmiedeteile gefertigt. Als Seitenflanschwerkstoff besonders geeignet sind insoweit insb. Stähle, wie z.B. Duplex-Stähle oder Superduplex-Stähle, die sich durch eine besonders hohe Festigkeit auszeichnen. Aus einem Duplex- oder Superduplex-Stahl bestehende Seitenflansche 1 bieten den Vorteil, dass die nicht von der ersten Stirnseite unterstützten Fortsätze 43 aufgrund der hohen Festigkeit dieser Werkstoffe deutlich größeren Drücken ausgesetzt werden können. Dabei können die Druckkanal-Anschlussbereiche 31 von ersten Prozessanschlüssen 27 mit als stabile Standbeine ausgeformten Fortsätzen 43 aus Duplexstahl mit Drücken von bis zu 1000 bar beaufschlagt werden, ohne dass eine die Dichtwirkung der Prozessdichtung 35 beeinträchtigende Verformung der Fortsätze 43 auftritt.

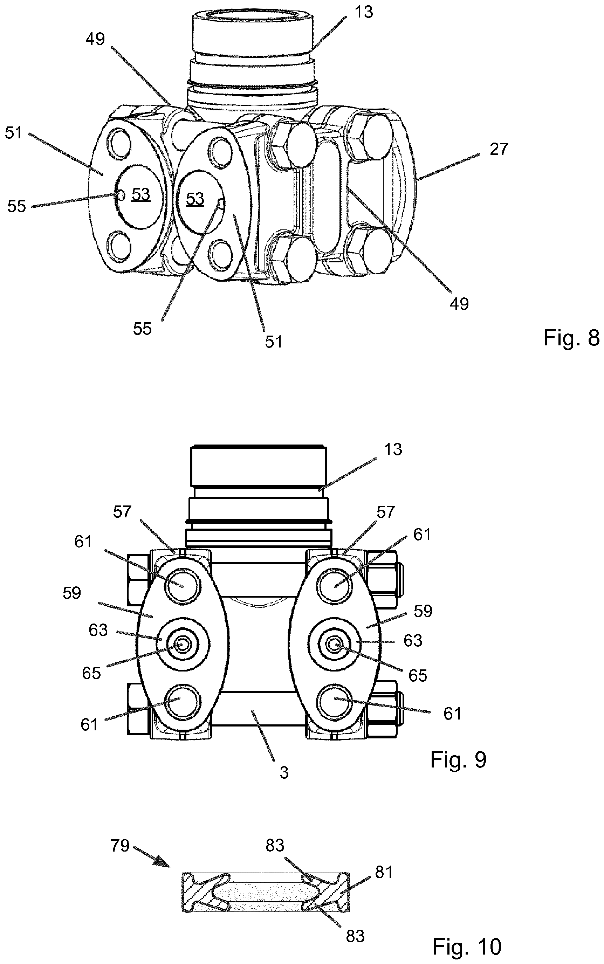

Fig. 8 zeigt eine Ansicht einer weiteren Ausführungsform eines erfindungsgemäßen Flansch-Satzes zusammen mit einem zwischen dessen beiden Seitenflanschen 49 eingespannten Messwerk 3. Diese Ausführungsform unterscheidet sich von den zuvor beschriebenen lediglich dadurch, dass die beiden Seitenflansche 49 zusätzlich zu deren ersten Prozessanschlüssen 27 jeweils einen auf einer der drei anderen Stirnseiten der Seitenwand 17 angeordneten zweiten Prozessanschluss 51 aufweisen. Auch die zweiten Prozessanschlüsse 51 umfassen jeweils einen Druckkanal-Anschlussbereich 53, in dem ein durch den jeweiligen Seitenflansch 49 zur Druckkammer 19 führender Druckkanal 55 mündet. Die in Fig. 8 dargestellten zweiten Prozessanschlüsse 51 sind baugleich zu den ersten Prozessanschlüssen 27 ausgebildet. Entsprechend kann ein mit diesem Flansch-Satz ausstatteter Differenzdruck-Messaufnehmer wahlweise entweder über die ersten oder über die zweiten Prozessanschlüsse 27, 51 auf Prozessanschlüssen 37 montiert werden, die die erste Prozessanschlussgeometrie aufweisen.

Alternativ kann ein erfindungsgemäßer Flansch-Satz auch zwei Seitenflansche 57 umfassen, die jeweils den ersten Prozessanschluss 27 und einen hierzu verschiedenen zweiten Prozessanschluss 59 aufweisen. Fig. 9 zeigt hierzu eine Ansicht einer die zweiten Prozessanschlüsse 59 umfassenden Außenseite eines zwischen den beiden Seitenflanschen 57 eingespannten Messwerks 3. Bei diesem Ausführungsbeispiel sind die zweiten Prozessanschlüsse 59 derart ausgebildet sind, dass ein mit dem Flansch-Satz ausgestatteter Differenzdruck-Messaufnehmer über die zweiten Prozessanschlüsse 59 auf einem Prozessanschluss montierbar und anschließbar ist, der die für den Anschluss und die Montage von Differenzdruck-Messaufnehmern mit auf gegenüberliegenden Außenseiten von deren Messwerk angeordneten, mit Druck zu beaufschlagenden Membranen ausgelegte zweite Prozessanschlussgeometrie, insb. die in den eingangs genannten Normen angegebene zweite Prozessanschlussgeometrie, aufweist.

Diese zweiten Prozessanschlüsse 59 umfassen jeweils einen an die zweite Stirnseite angeformten Flansch, insb. einen Ovalflansch, zwei Bohrungen 61 zur Aufnahme von Befestigungsmitteln, sowie einen mittig zwischen den beiden Bohrungen 61 auf einer die beiden Bohrungen 61 verbindenden, gedachten Linie angeordneten Druckkanal-Anschlussbereich 63, in dem ein durch den jeweiligen Seitenflansch 57 hindurch zur Druckkammer 19 führender Druckkanal 65 mündet.

Mit diesen Flansch-Sätzen ausgestattete Messaufnehmer können wahlweise über deren ersten Prozessanschlüsse 27 auf Prozessanschlüssen 37 der ersten Prozessanschlussgeometrie oder über deren zweiten Prozessanschlüsse 59 auf Prozessanschlüssen der zweiten Prozessanschlussgeometrie montiert werden.

Unabhängig von deren Ausgestaltung sind die zweiten Prozessanschlüsse 51, 59 vorzugsweise auf den ersten Prozessanschlüssen 27 gegenüberliegenden Stirnseiten der Seitenflansche 49, 57 angeordnet. Mit diesen Flansch-Sätzen ausgestatten Differenzdruck-Messaufnehmer bieten den Vorteil, dass die beiden zur Druckbeaufschlagung genutzten ersten oder zweiten Prozessanschlüsse 27 oder 51, 59 bei Differenzdruckmessungen von gasförmigen Prozessmedien oben angeordnet werden können und über die beiden auf den gegenüberliegenden Stirnseiten unten angeordneten Prozessanschlüsse 51, 59 oder 27 bei Bedarf Kondensat abgelassen werden kann. Darüber hinaus können die beiden zur Druckbeaufschlagung genutzten Prozessanschlüsse 27 oder 51, 59 bei Differenzdruckmessungen von flüssigen Prozessmedien unten angeordnet werden, so dass über die beiden auf den gegenüberliegenden Stirnseiten oben angeordneten Prozessanschlüsse 51, 59 oder 27 bei Bedarf eine Belüftung der Druckkammern 19 vorgenommen werden kann.

Flansch-Sätze mit ersten und zweiten Prozessanschlüssen 27, 51, 59 umfassen vorzugsweise für jeden Seitenflansch 49. 57 jeweils ein mittels mechanischer Verbindungmittel, insb. lösbarer Verbindungsmittel, montierbares im montierten Zustand den im Druckkanal-Anschlussbereich 31, 53, 63 des ersten oder des zweiten Prozessanschlusses 27, 51, 59 mündenden Druckkanal 33, 55, 65 nach außen verschließendes Element, insb. eine Belüftungsschraube 69 oder einen Verschluss 71.

Bei Flansch-Sätzen, deren Seitenflansche 1 nur den ersten Prozessanschluss 27 umfassen, kann in beiden Seitenflanschen 1 optional jeweils ein von der Druckkammer 19 durch die Seitenwand 17 des jeweiligen Seitenflansches 1 hindurch verlaufender Kanal 67 vorgesehen werden, über den im Bedarfsfall eine Belüftung der unter dem jeweiligen Seitenflansch 1 eingeschlossenen Druckkammer 19 vorgenommen werden kann und/oder über den Kondensat abgelassen werden kann. Diese Kanäle 67 können, wie hier dargestellt, auf der der Druckkammer 19 gegenüberliegenden Außenseite des jeweiligen Seitenflansches 1 münden. Alternativ können sie aber auch jeweils auf einer der drei von außen zugänglichen Stirnseiten, z.B. auf der der ersten Stirnseiten gegenüberliegenden Stirnseite des jeweiligen Seitenflansches 1, münden. Zusätzlich sind die Kanäle 67 im jeweiligen Seitenflansch 1 vorzugsweise derart angeordnet, dass sie auf der Innenseite des jeweiligen Seitenflansches 1 in einem von dem ersten Prozessanschluss 27 abgewandten Randbereich der jeweiligen Druckkammer 19 münden.

Auch diese Flansch-Sätze umfassen vorzugsweise für jeden Kanal 67 ein mittels mechanischer Verbindungmittel, insb. lösbarer Verbindungsmittel, montierbares, im montierten Zustand den Kanal 67 nach außen verschließendes Element, insb. eine Belüftungsschraube 69 oder einen Verschluss 71. Fig. 4 und 6 zeigen hierzu exemplarisch zwei analog auch in den Ausführungsbeispielen von Fig. 8 und 9 einsetzbare Belüftungsschrauben 69. Fig. 5 zeigt exemplarisch zwei analog auch in den Ausführungsbeispielen von Fig. 8 und 9 einsetzbare Verschlüsse 71.

Wie aus Fig. 7 ersichtlich werden erfindungsgemäße Flansch-Sätze sowie damit ausgestattete Differenzdruck-Messaufnehmer vorzugsweise mit zwei Prozessdichtungen 35 ausgestattet, die im montierten Zustand den durch den messstellenseitig vorgesehenen Prozessanschluss 37 hindurch zum zugehörigen Druckkanal 33 verlaufenden Druckübertragungspfad nach außen abdichten.

Als Prozessdichtungen können aus dem Stand der Technik bekannte Dichtungen, wie z.B. O-Ringe, eingesetzt werden.

Als Prozessdichtungen 35 eignen sich insb. metallische Ringkörper mit zwei auf deren einander gegenüberliegenden Seiten angeordnete Dichtflächen, deren Abstand zueinander durch das Einspannen der Prozessdichtung 35 zwischen der Prozessanschlussfläche 29 des jeweiligen ersten Prozessanschlusses 27 und der Prozessanschlussfläche des messstellenseitig vorgesehenen Prozessanschlusses 37 zumindest anteilig elastisch verringert wird.

Diese Prozessdichtungen 35 können in die Druckkanal-Anschlussbereiche 31 außenseitlich allseitig umgebende Nuten eingesetzt werden. In dem Fall bestimmt die Tiefe der Nut die Kompression die Prozessdichtung 35 im eingespannten Zustand erfährt.

Alternativ kann die Kompression der Prozessdichtungen 35 über eine - in Fig. 7 als Option dargestellte - zwischen die Prozessanschlussflächen 29 der beiden ersten Prozessanschlüsse 27 und der Prozessanschlussfläche des damit zu verbindenden Prozessanschlusses 37 einzuspannenden Dichtplatte 73 in einer über die Dicke der Dichtplatte 73 deutlich präziser vorgebbaren Weise eingestellt werden. Bei dieser Ausführungsvariante weist die Dichtplatte 73 eine Dicke auf, die der Dicke der Prozessdichtungen 35 im eingespannten Zustand entspricht.

Als Dichtplatte 73 eignet sich insb. eine einteilige, vorzugsweise metallische Platte, die vier in einem Rechteck angeordnete Durchtrittsöffnungen 75 umfasst, die im auf die Prozessanschlussflächen 29 der ersten Prozessanschlüsse 27 aufgelegten Zustand die Bohrungen 47 der beiden ersten Prozessanschlüsse 27 freigeben, und die zwei weitere Durchtrittsöffnungen 77 umfasst, die im aufgelegten Zustand die Druckkanal-Anschlussbereiche 31 der beiden ersten Prozessanschlüsse 29 freigeben. Insoweit eignen sich insb. Dichtplatten, die analog zu den in der DE 10 2014 102 719 A1 beschriebenen, dort auf einer eine zwei in einer Ebene nebeneinander angeordnete Membranen umfassende Außenseite eines Messwerks eines Differenzdruck-Messaufnehmers angeordneten, plattenförmigen Abstandshaltern ausgebildet sind.

Die weiteren Durchtrittsöffnungen 77 können beispielsweise als Dichtungsaufnahmen zur Aufnahme jeweils einer der beiden Prozessdichtungen 35 ausgebildet sein. In dem Fall können die Prozessdichtungen 35 als separate in Presspassung oder in Spielpassung die Dichtungsaufnahmen einsetzbare Bauteile oder aber als mit der Dichtplatte 73 verbundene Bauteile ausgebildet sein. Dabei können anstelle der in Fig. 7 dargestellten Prozessdichtungen 35 alternativ auch anderen Dichtgeometrien aufweisende Prozessdichtungen eingesetzt werden. Fig. 10 zeigt hierzu eine Schnittzeichnung eines Ausführungsbeispiels einer Prozessdichtung 79, die einen ringzylindrischen, formsteifen Basiskörper 81 umfasst, an den zwei sich radial nach innen erstreckende Federschenkel 83 derart angeformt sind, dass sich im Schnitt gesehen ein im Wesentlichen K-förmiges Profil ergibt.

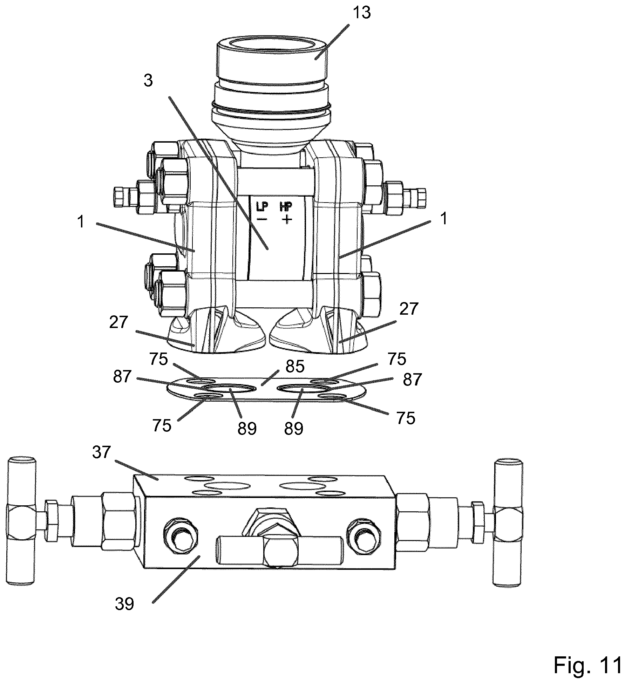

Eine weitere in Fig. 11 dargestellte Alternative besteht darin, eine Dichtplatte 85 vorzusehen, die als integrale Bestandteile der Dichtplatte ausgebildete Prozessdichtungen 87 umfasst. Diese Ausführungsform unterscheidet sich von der in Fig. 7 dargestellten Dichtplatte 73 dadurch, dass jede der beiden weiteren Durchtrittsöffnungen 89 außenseitlich allseitig von einem als Prozessdichtung 89 wirkenden Plattenbereich umgeben ist. Dieser Plattenbereich kann z.B. durch plastische Verformung auf beiden Seiten der Dichtplatte erzeugte konzentrische, ringförmige Rippen umfassen, oder aber durch plastische Verformung gegenüber den planaren Oberflächen der Dichtplatte in eine neue, axial versetzte Gleichgewichtslage versetzt worden sein.

Während Dichtplatten 85 mit integrierten Prozessdichtungen 87 vorzugsweise eine geringere Dicke, insb. eine Dicke von 0,8 mm bis 2,0 mm, aufweisen, können Dichtplatten 73 mit als Dichtungsaufnahmen ausgebildeten weiteren Durchtrittsöffnungen 77 bei entsprechender Anpassung der Dicke der aufzunehmenden Prozessdichtung 35 durchaus auch eine größere Dicke, insb. eine Dicke von 2,4 mm bis 4,0 mm, aufweisen.

Unabhängig von der gewählten Dichtgeometrie kann auf einer oder auf beiden Dichtflächen der Prozessdichtungen 35, 79, 87 optional eine nicht-metallische Beschichtung vorgesehen sein. Hierzu eignen sich z.B. thermoplastische Beschichtungen, wie z.B. Beschichtungen aus einem Fluorpolymer, z.B. aus Polytetrafluorethylen (PTFE) oder aus einem Perfluoralkoxy-Polymer (PFA), oder Beschichtungen aus solche Fluorpolymere enthaltenden Verbundwerkstoffen.

| | | | |
|---|---|---|---|
| 1 | Seitenflansch | 67 | Kanal Belüftungsschrauben |
| 3 | Messwerk | 71 | Verschlussstopfen |
| 5 | Differenzdrucksensor | 73 | Dichtplatte |
| 7 | Membran | 75 | Durchtrittsöffnung |
| 9 | Druckmittler | 77 | weitere Durchtrittsöffnung |
| 11 | Messelektronik | 79 | Prozessdichtung |
| 13 | Gehäuse | 81 | Basiskörper Federschenkel |
| 15 | Träger | 85 | Dichtplatte |
| 17 | Seitenwand | 87 | Prozessdichtung |
| 19 | Druckkammer | 89 | weitere Durchtrittsöffnung |
| 21 | Bolzenschrauben | | |
| 23 | Dichtung | | |
| 25 | Nut | | |
| 27 | erster Prozessanschluss | | |
| 29 | Prozessanschlussfläche | | |
| 31 | Druckkanal-Anschlussbereich | | |
| 33 | Druckkanal | | |
| 35 | Prozessdichtung | | |
| 37 | Prozessanschluss | | |
| 39 | Ventilblock | | |
| 41 | Flanschbereich | | |
| 43 | Fortsatz | | |
| 45 | scheibenförmiger Flansch | | |
| 47 | Bohrungen | | |
| 49 | Seitenflansch | | |
| 51 | zweiter Prozessanschluss | | |
| 53 | Druckkanal-Anschlussbereich | | |
| 55 | Druckkanal | | |
| 57 | Seitenflansch | | |
| 59 | zweiter Prozessanschluss | | |
| 61 | Bohrungen | | |
| 63 | Druckkanal-Anschlussbereich Druckkanal | | |

## Patentansprüche

1. Flansch-Satz für einen Differenzdruck-Messaufnehmer mit zwei auf einander gegenüberliegende, jeweils eine mit einem Druck zu beaufschlagende Membran (7) umfassende Außenseiten eines Messwerks (3) des Differenzdruck-Messaufnehmers montierbaren Seitenflanschen (1, 49, 57), die jeweils
- eine Seitenwand (17) umfassen, die im montierten Zustand eine der beiden Membranen (7) des Messwerks (3) überdeckt und unter sich eine an die jeweilige Membran (7) angrenzende Druckkammer (19) einschließt, und
- einen auf einer ersten von vier einander jeweils paarweise gegenüberliegenden Stirnseiten der Seitenwand (17) angeordneten ersten Prozessanschluss (27) umfassen, der einen Druckkanal-Anschlussbereich (31) umfasst, in dem ein durch den Seitenflansch (1) hindurch zur Druckkammer (19) führender Druckkanal (33) mündet,
wobei
- die ersten Prozessanschlüsse (27) derart ausgebildet sind, dass ein mit dem Flansch-Satz ausgestatteter Differenzdruck-Messaufnehmer über die ersten Prozessanschlüsse (27) auf einem Prozessanschluss (37) montierbar und anschließbar ist, der eine für den Anschluss und die Montage von Differenzdruck-Messaufnehmern mit zwei auf ein und derselben Außenseite von deren Messwerk angeordneten, mit Druck zu beaufschlagenden Membranen ausgelegte erste Prozessanschlussgeometrie aufweist,
wobei
- die ersten Prozessanschlüsse (27) jeweils zwei Bohrungen (47) umfassen,
-- die zur Aufnahme von Befestigungsmitteln, insb. von Bolzenschrauben (21) dienen, über die der jeweilige erste Prozessanschluss (27) auf einer Hälfte eines die erste Prozessanschlussgeometrie aufweisenden Prozessanschlusses (37) befestigbar ist, und
-- die derart angeordnet sind, dass die Bohrungen (47) beider Seitenflansche (1, 49, 57) im auf das Messwerk (3) montierten Zustand in einem Rechteck angeordnet sind, **dadurch gekennzeichnet, dass**
- die Druckkanal-Anschlussbereiche (31) der ersten Prozessanschlüsse (27) jeweils mittig zwischen den beiden Bohrungen (47) und gegenüber einer die beiden Bohrungen (55) verbindenden, gedachten Linie in einer parallel zur Flächennormale auf die Innenseite der Seitenwand 17 des jeweiligen Seitenflansches (1, 49, 57) nach innen weisenden Richtung versetzt angeordnet sind.

2. Flansch-Satz gemäß Anspruch 1, **dadurch gekennzeichnet, dass** die ersten Prozessanschlüsse (27) an die jeweilige erste Stirnseite angeformte Sonderflansche umfassen, die jeweils einen an die erste Stirnseite angrenzenden Flanschbereich (41) und einen an dessen parallel zur Innenseite der Seitenwand (17) ausgerichteten Innenseite anschließenden Fortsatz (43) umfassen.

3. Flansch-Satz gemäß Anspruch 2, **dadurch gekennzeichnet, dass** die Grundflächen der Fortsätze (43) in von der ersten Stirnseite zur Prozessanschlussfläche (29) des jeweiligen ersten Prozessanschlusses (27) verlaufender Richtung kontinuierlich ansteigen, wobei die Grundflächen insb. im Wesentlichen kreissegmentförmige oder ellipsensegmentförmige Grundflächen sind und/oder die Grundflächen insb. derart ansteigen, dass die Fortsätze (4) auf deren von der Prozessanschlussfläche (29) abgewandten Außenseite eine im Schnitt gesehen nach außen gewölbte Mantelfläche ausbilden.

4. Flansch-Satz gemäß Anspruch 1, **dadurch gekennzeichnet, dass**
- in beiden Seitenflanschen (1) jeweils ein durch dessen Seitenwand (17) hindurch verlaufender, in der Druckkammer (19), insb. in einem vom ersten Prozessanschluss (27) abgewandten Randbereich der Druckkammer (19), mündender Kanal (67) vorgesehen ist, und
- für jeden Kanal (67) ein mittels mechanischer Verbindungmittel, insb. lösbarer Verbindungsmittel, montierbares, im montierten Zustand den Kanal (67) nach außen verschließendes Element, insb. eine Belüftungsschraube (69) oder ein Verschluss (71), vorgesehen ist.

5. Flansch-Satz gemäß Anspruch 1, **dadurch gekennzeichnet, dass** die Seitenflansche (49, 57) jeweils einen auf einer zweiten Stirnseite, insb. auf einer der ersten Stirnseite gegenüberliegenden zweiten Stirnseite, der Seitenwand (17) angeordneten zweiten Prozessanschluss (51, 59) aufweisen, der einen Druckkanal-Anschlussbereich (53, 63) umfasst, in dem ein durch den jeweiligen Seitenflansch (49, 57) hindurch zur Druckkammer (19) führender Druckkanal (55, 65) mündet.

6. Flansch-Satz gemäß Anspruch 5, **dadurch gekennzeichnet, dass**
- die zweiten Prozessanschlüsse (59) derart ausgebildet sind, dass ein mit dem Flansch-Satz ausgestatteter Differenzdruck-Messaufnehmer über die zweiten Prozessanschlüsse (59) auf einem Prozessanschluss montierbar und anschließbar ist, der eine für den Anschluss und die Montage von Differenzdruck-Messaufnehmern mit auf gegenüberliegenden Seiten von deren Messwerk angeordneten mit Druck zu beaufschlagenden Membranen ausgelegte zweite Prozessanschlussgeometrie aufweist,
- wobei die zweiten Prozessanschlüsse (59) insb. jeweils einen an die zweite Stirnseite angeformten Flansch, insb einen Ovalflansch, umfassen, in dem der Druckkanal-Anschlussbereich (63) mittig zwischen zwei Bohrungen (61) zur Aufnahme von Befestigungsmitteln auf einer die beiden Bohrungen (61) verbindenden gedachten Linie angeordnet ist.

7. Flansch-Satz gemäß Anspruch 5, **dadurch gekennzeichnet, dass** die zweiten Prozessanschlüsse (51) baugleich zu den ersten Prozessanschlüssen (27) ausgebildet sind.

8. Flansch-Satz gemäß Anspruch 5, **dadurch gekennzeichnet, dass** für jeden Seitenflansch (49, 57) jeweils ein mittels mechanischer Verbindungmittel, insb. lösbarer Verbindungsmittel, auf dem Seitenflansch (49, 57) montierbares Element, insb. eine Belüftungsschraube (69) oder ein Verschluss (71), vorgesehen ist, das im montierten Zustand einen der im Druckkanal-Anschlussbereich (31, 53, 63) des ersten oder des zweiten Prozessanschlusses (27, 51, 59) mündenden Druckkanäle (33, 55, 65) nach außen verschließt.

9. Flansch-Satz gemäß Anspruch 1, **dadurch gekennzeichnet, dass** die Druckkanäle (33) in den ersten Prozessanschlüssen (27) jeweils in einem einer Außenseite des jeweiligen Seitenflanschs (1) zugewandten Randbereich des zugehörigen Druckkanal-Anschlussbereichs (31) münden.

10. Flansch-Satz gemäß Anspruch 1, **dadurch gekennzeichnet, dass** die Seitenflansche (1, 49, 57) aus Metall, insb. aus einem Stahl, insb. aus einem Duplexstahl oder einem Superduplexstahl bestehen, wobei sie insb. als einteilige Elemente, insb. als einteilige Guß- oder Schmiedeteile, ausgebildet sind.

11. Mit einem Flansch-Satz gemäß einem oder mehreren der vorangehenden Ansprüche ausgestatteter Differenzdruck-Messaufnehmer, **dadurch gekennzeichnet, dass**
- der Differenzdruck-Messaufnehmer ein mit einem Differenzdrucksensor (5) ausgestattetes Messwerk (3) mit zwei auf einander gegenüberliegenden Außenseiten des Messwerks (3) angeordneten, mit Druck zu beaufschlagenden Membranen (7) umfasst, und
- die beiden Seitenflansche (1, 49, 57) auf den gegenüberliegenden Außenseiten des Messwerks (3) in einer Ausrichtung relativ zum Messwerk (3) derart montiert sind, dass deren ersten Prozessschlüsse (27) in einer Ebene nebeneinander angeordnet sind.

12. Differenzdruck-Messaufnehmer gemäß Anspruch 11, **dadurch gekennzeichnet, dass** der Differenzdruck-Messaufnehmer mittels der ersten Prozessanschlüsse (29) unter Zwischenfügung von zwei Prozessdichtungen (35, 79, 87) auf einem die erste Prozessanschlussgeometrie aufweisenden Prozessanschluss (37) montiert ist.

## Claims

1. Flange set for a differential pressure sensor with two side flanges (1, 49, 57) which can be mounted on exterior sides of a measuring system (3) of the differential pressure sensor, said sides being located opposite one another and each comprising a membrane (7) that is to be subjected to a pressure, wherein said side flanges
- each comprise a side wall (17) which, when mounted, covers one of the two membranes (7) of the measuring system (3) and encloses a pressure chamber (19) adjacent to the respective membrane (7), and
- each comprise a first process connection (27) arranged on a first of four front faces of the side wall (17), said front faces being located opposite one another in pairs, wherein said process connection comprises a pressure channel connection area (31) into which a pressure channel (33) enters, said pressure channel running through the side flange (1) to the pressure chamber (19),
wherein
- the first process connections (27) are designed in such a way that a differential pressure sensor equipped with the flange set can be mounted and connected on a process connection (37) via the first process connections (27), said process connection having a first process connection geometry designed for the connection and mounting of differential pressure sensors with two membranes located on the same exterior side of their measuring system, wherein said membranes are to be subjected to a pressure,
wherein
- the first process connections (27) each comprise two boreholes (47),
-- which serve to accommodate fasteners, particularly bolts (21), via which the first process connection (27) can be secured to a half of a process connection (37) having the first process connection geometry, and
-- which are arranged in such a way that the boreholes (47) of the two side flanges (1, 49, 57) - when mounted in the measuring system (3) - are arranged in a manner that forms a rectangle,
**characterized in that**
- the pressure channel connection areas (31) of the first process connections (27) are each arranged centrally between the two boreholes (47) and opposite an imaginary line connecting the two boreholes (55) in an offset manner in a direction that is parallel to the surface normal and oriented towards the interior side of the side wall (17) of the relevant side flange (1, 49, 57).

2. Flange set as claimed in Claim 1, **characterized in that** the first process connections (27) comprise special flanges that are formed on the first front face in each case, said flanges each having a flange area (41) that is adjacent to the first front face and an extension (43) adjacent to the interior side which is aligned parallel to the interior side of the side wall (17).

3. Flange set as claimed in Claim 2, **characterized in that** the base areas of the extensions (43) increase continuously in a direction extending from the first front face to the process connection surface (29) of the relevant first process connection (27), wherein, in particular, the base areas are essentially in the form of a circular segment or elliptical segment and/or the base areas particularly increase in such a way that the extensions (4) - viewed as a cross-section - form a lateral surface that is curved towards the outside on their exterior side facing away from the process connection surface (29).

4. Flange set as claimed in Claim 1, **characterized in that**
- a channel (67) is provided in the two side flanges (1), said channel extending through the side wall (17) and entering into the pressure chamber (19), particularly in a marginal area of the pressure chamber (19) facing away from the first process connection (27), and
- an element, particularly a ventilation screw (69) or a seal (71), is provided for each channel (67), wherein said element can be mounted using a mechanical fastener, particularly a detachable fastener, and - when mounted - seals the channel (67) to the outside.

5. Flange set as claimed in Claim 1, **characterized in that** the side flanges (49, 57) each has a second process connection (51, 59) arranged on a second front face of the side wall (17), particularly a second front face located opposite the first front face, said second process connection comprising a pressure channel connection area (53, 63) into which a pressure channel (55, 65) enters, said pressure channel extending through the relevant side flange (49, 57) to the pressure chamber (19).

6. Flange set as claimed in Claim 5, **characterized in that**
- the second process connections (59) are designed in such a way that a differential pressure sensor equipped with the flange set can be mounted and connected on a process connection via the second process connections (59), said process connection having a second process connection geometry designed for the connection and mounting of differential pressure sensors with membranes located on opposite sides of their measuring system, wherein said membranes are to be subjected to a pressure,
- wherein the second process connections (59) each comprise, in particular, a flange formed on the second front face, particularly an oval flange, in which the pressure channel connection area (63) is arranged in the middle between two boreholes (61), designed to accommodate fasteners, on an imaginary line connecting the two boreholes (61).

7. Flange set as claimed in Claim 5, **characterized in that** the second process connections (51) are designed in an identical manner to the first process connections (27).

8. Flange set as claimed in Claim 5, **characterized in that** an element, particularly a ventilation screw (69) or a seal (71), is provided for every side flange (49, 57), wherein said element can be mounted on the side flange (49, 57) using a mechanical fastener, particularly a detachable fastener, and - when mounted - seals to the outside one of the pressure channels (33, 55, 65) entering into the pressure channel connection area (31, 53, 63) of the first or the second process connection (27, 51, 59).

9. Flange set as claimed in Claim 1, **characterized in that** the pressure channels (33) in the first process connections (27) each enter into a marginal area of the associated pressure channel connection area (31) that faces towards an exterior side of the side flange (1).

10. Flange set as claimed in Claim 1, **characterized in that** the side flanges (1, 49, 57) are made from metal, particularly from a steel, particularly from a duplex steel or a superduplex steel, wherein the flanges are formed, in particular, as one-piece elements, particularly as one-piece cast parts or forged parts.

11. Differential pressure sensor equipped with a flange set as claimed in one or more of the previous claims, **characterized in that**
- the differential pressure sensor comprises a measuring system (3) that is equipped with a differential pressure detector (5) with two membranes (7) arranged on opposite exterior sides of the measuring system (3), wherein said membranes (7) are to be subjected to pressure, and
- the two side flanges (1, 49, 57) are mounted on the opposite exterior sides of the measuring system (3) in an orientation relative to the measuring system (3) in such a way that their first process connections (27) are arranged beside one another on a plane.

12. Differential pressure sensor as claimed in Claim 11, **characterized in that** the differential pressure sensor is mounted - using the first process connections (29) - on a process connection (37) that has the first process connection geometry by inserting two process seals (35, 79, 87).

## Revendications

1. Jeu de brides pour un transmetteur de pression différentielle avec deux brides latérales (1, 49, 57) pouvant être montées sur les faces extérieures d'un système de mesure (3) du transmetteur de pression différentielle, lesquelles faces sont opposées et comprennent la membrane (7) pouvant être soumise à une pression, lesquelles brides latérales
- comprennent respectivement une paroi latérale (17) qui, à l'état monté, recouvre l'une des deux membranes (7) du système de mesure (3) et entoure sous elle une chambre de pression adjacente à la membrane (7) respective, et
- comprennent respectivement un premier raccord process (27) disposé sur la première parmi quatre faces frontales de la paroi latérale (17), faces frontales étant respectivement opposées par paires, lequel raccord process comprend une zone de raccordement à canal de pression (31), dans laquelle débouche un canal de pression (33) menant à la chambre de pression (19) à travers la bride latérale (1),
pour lequel
- les premiers raccords process (27) sont conçus de telle sorte qu'un transmetteur de pression différentielle équipé du jeu de brides puisse être monté et raccordé par l'intermédiaire des premiers raccords process (27) sur un raccord process (37), qui présente une première géométrie de raccord process conçue pour le raccordement et le montage de transmetteurs de pression différentielle avec deux membranes disposées sur une même face extérieure de leur système de mesure, lesquelles membranes peuvent être soumises à une pression,
pour lequel
- les premiers raccords process (27) comprennent chacun deux perçages (47),
-- qui servent au logement de moyens de fixation, notamment de boulons (21), par l'intermédiaire desquels le premier raccord process (27) correspondant peut être fixé sur une moitié d'un raccord process (37) présentant la première géométrie de raccord process, et
-- qui sont disposés de telles sorte que les perçages (47) des deux brides latérales (1, 49, 57), à l'état monté dans le système de mesure (3), forment un rectangle,
**caractérisé**
- **en ce que** les zones de raccordement à canal de pression (31) des premiers raccords process (27) sont disposés respectivement de façon centrée entre les deux perçages (47) et de façon décalée par rapport à une ligne imaginaire reliant les deux perçages (55), dans une direction orientée vers l'intérieur, dans une face intérieure de la paroi latérale (17) de la bride latérale (1, 49, 57) correspondante, parallèlement à la normale de surface.

2. Jeu de brides selon la revendication 1, **caractérisé en ce que** les premiers raccords process (27) comportent, sur la première face frontale respective, des brides spéciales, qui comprennent une saillie (43) jouxtant une zone de bride (41) adjacente à la première face frontale, et sa face intérieure orientée parallèlement à la face intérieure de la paroi latérale (17).

3. Jeu de brides selon la revendication 2, **caractérisé en ce que** les surfaces de base des saillies (43) augmentent continuellement dans une direction allant de la première face frontale à la surface (29) du premier raccord process (27) respectif, les surfaces de base étant notamment pour l'essentiel des surfaces de base en forme de segments de cercle ou en forme de segments d'ellipse, et/ou les surfaces de base augmentant notamment de telle sorte que les saillies (4) forment une surface latérale courbe, vue en coupe vers l'extérieur, sur leur face extérieure située à l'opposé de la surface de raccord process (29).

4. Jeu de brides selon la revendication 1, **caractérisé**
- **en ce qu'**est prévu, dans les deux brides latérales (1), un canal (67) passant à travers sa paroi latérale (17) et débouchant dans la chambre de pression (19), notamment dans une zone marginale de la chambre de pression (19) située à l'opposé du premier raccord process (27), et
- **en ce qu'**est prévu, pour chaque canal (67), un élément pouvant être monté à l'aide d'un moyen de connexion, notamment un moyen de connexion amovible, lequel élément, dans son état monté, obture le canal (67) par rapport à l'extérieur, lequel élément est notamment une vis de purge (69) ou un obturateur (71).

5. Jeu de brides selon la revendication 1, **caractérisé en ce que** les brides latérales (49, 57) présentent chacune un deuxième raccord process (51, 59) disposé sur une deuxième face frontale, notamment sur une face frontale de la paroi latérale (17) située à l'opposé de la première face frontale, lequel deuxième raccord process comprend une zone de raccordement à canal de pression (53, 63), dans laquelle débouche un canal de pression (55, 65) menant à la chambre de pression (19) en traversant la bride latérale (49, 57) respective.

6. Jeu de brides selon la revendication 5, **caractérisé en ce que**
- les deuxièmes raccords process (59) sont conçus de telle sorte qu'un transmetteur de pression différentielle équipé du jeu de brides puisse être monté et raccordé au moyen des deuxièmes raccords process (59) sur un raccord process, lequel présente une deuxième géométrie de raccord process conçue pour le raccordement et le montage de transmetteurs de pression différentielle avec des membranes pouvant être soumise à une pression, disposées sur des côtés opposés de leur système de mesure,
- les deuxièmes raccords process (59) comprenant chacun notamment une bride formée sur la deuxième face frontale, notamment une bride ovale, dans laquelle la zone de raccordement à canal de pression (63) est disposée au centre entre deux perçages (61) destinés au logement de moyens de fixation sur une ligne imaginaire reliant les deux perçages (61).

7. Jeu de brides selon la revendication 5, **caractérisé en ce que** les deuxièmes raccords process (51) sont de conception identique aux premiers raccords process (27).

8. Jeu de brides selon la revendication 5, **caractérisé en ce que**, pour chaque bride latérale (49, 57), est prévu respectivement un élément pouvant être monté à l'aide d'un moyen de connexion mécanique, notamment un moyen de connexion amovible, sur la bride latérale (49, 57), lequel élément est notamment une vis de purge (69) ou un obturateur (71), lequel élément, dans son état monté, obture par rapport à l'extérieur des canaux de pression (33, 55, 65) débouchant dans la zone de raccordement à canal de pression (31, 53, 63) du premier ou du deuxième raccord process (27, 51, 59).

9. Jeu de brides selon la revendication 1, **caractérisé en ce que** les canaux de pression (33) débouchent dans les premiers raccords process (27), respectivement dans une zone marginale de la zone de raccordement à canal de pression (31) correspondante, laquelle zone marginale fait face à un côté extérieur de la bride latérale (1) respective.

10. Jeu de brides selon la revendication 1, **caractérisé en ce que** les brides latérales (1, 49, 57) sont constituées d'un métal, notamment un acier, notamment un acier duplex ou un acier superduplex, les brides étant conçues notamment en tant qu'éléments en une pièce, notamment en tant que pièces moulées ou forgées en une pièce.

11. Transmetteur de pression différentielle équipé d'un jeu de brides selon l'une ou plusieurs des revendications précédentes, **caractérisé en ce que**
- le transmetteur de pression différentielle comprend un système de mesure (3) équipé d'un capteur de pression différentielle (5) avec deux membranes (7) pouvant être soumise à une pression, disposées sur des côtés opposés du système de mesure (3), et
- les deux brides latérales (1, 49, 57) sont montées sur les côté extérieurs opposés du système de mesure (3), selon une orientation par rapport au système de mesure (3) telle que leurs premiers raccords process (27) sont disposés côte à côté dans un plan.

12. Transmetteur de pression différentielle selon la revendication 11, **caractérisé en ce que** le transmetteur de pression différentielle est monté sur un raccord process (37) présentant la première géométrie de raccord process au moyen des premiers raccords process (29) avec l'interposition de deux joints de process (35, 79, 87).
